# FASCICULE DE BREVET EUROPEEN

(11) **EP 0 718 951 B1**
(45) Date de publication et mention de la délivrance du brevet: **16.06.1999**
(21) Numéro de dépôt: 95402858.5
(22) Date de dépôt: 18.12.1995
(51) Int. Cl.: H02J 7/34, H04B 1/44, H02M 3/155

(54) **Dispositif d'alimentation électrique notamment pour appareils portatifs**
Stromversorgungseinrichtung insbesondere für tragbare Geräte
Electrical power supply device especially for portable apparatuses

(30) Priorité: 20.12.1994 FR 9415335
(43) Date de publication de la demande: 26.06.1996
(73) Titulaire: ALCATEL, 75008 Paris (FR)
(72) Inventeur: Andrieu, Xavier, F-91220 Bretigny sur Orge (FR); Poignant, Philippe, F-91120 Palaiseau (FR)
(74) Mandataire: Prugneau, Philippe

(56) Documents cités:
- EP-A- 0 613 257
- WO-A-92/12563
- BE-A- 1 006 603
- US-A- 5 079 674
- PATENT ABSTRACTS OF JAPAN vol. 017, no. 148 (E-1338), 24 Mars 1993 & JP-A-04 315320 (SONY CORP), 6 Novembre 1992,

## Description

L'invention porte sur un dispositif d'alimentation électrique notamment pour appareils portatifs comme un radiotéléphone cellulaire, par exemple du type GSM.

Dans le cas particulier d'un radiotéléphone cellulaire, la consommation d'énergie est du type impulsionnelle, c'est-à-dire variable dans le temps avec des pointes pendant des courts intervalles de temps, les intervalles de temps où la consommation est forte se situant typiquement pendant les phases d'émission du radiotéléphone.

Les dispositifs d'alimentation électriques traditionnels pour alimenter les appareils portatifs sont disponibles sur le marché avec des capacités différentes et des générateurs électrochimiques variés. Pour ce genre d'appareil, on recherche toujours des dispositifs d'alimentation ayant un poids et un encombrement le plus faible possible et qui procurent l'énergie électrique le plus longtemps possible. En d'autres termes, on recherche toujours des dispositifs d'alimentation ayant le meilleur rendement énergétique possible.

En outre, les appareils portatifs du genre des radiotéléphones cellulaires étant sensibles aux interférences électromagnétiques, on recherche pour ces appareils, des dispositifs d'alimentation peu ou pas émetteurs de bruits parasites.

Le document EP-A-0 613 257 divulgue un dispositif d'alimentation en énergie électrique selon le préambule de la revendication 1. Le document WO-A-92/12563 divulgue un dispositif d'alimention en énergie électrique pour un appareil externe à consommation variable dans le temps utilisant un supercondensateur servant de source d'énergie électrique pour l'appareil.

Le but de l'invention est de proposer un dispositif d'alimentation en énergie électrique apte à fournir une forte puissance avec un bon rendement énergétique.

Un autre but de l'invention est de proposer un tel dispositif apte à alimenter un appareil portatif comme un radiotéléphone et qui est peu bruyant.

A cet effet, l'invention a pour objet un dispositif d'alimentation en énergie électrique pour un appareil externe à consommation variable dans le temps tel que défini dans la revendication 1. Plus particulièrement, ce dispositif comprend un générateur électrochimique, un supercondensateur servant de source d'énergie électrique pour ledit appareil et un convertisseur de tension à découpage entre le générateur et le supercondensateur, ce convertisseur fonctionnant pour charger à courant constant le supercondensateur tout en contrôlant la tension aux bornes de celui-ci. Ainsi, le générateur électrochimique fonctionne à un régime moyen faible ce qui contribue à augmenter sa durée de vie.

Les pointes d'appel de puissance venant de l'appareil externe sont absorbées par le supercondensateur constituant un élément de stockage d'énergie électrique.

Le rendement du convertisseur de tension à découpage est optimisé du fait de son régime de fonctionnement à courant constant quelles que soient les variations de la consommation de l'appareil externe.

Selon un mode de réalisation particulier de l'invention, le générateur électrochimique est un accumulateur Lithium-Carbone (LiC) moins lourd et moins encombrant que les traditionnels accumulateurs Nickel-Cadmium (Nicd). On comprend donc que le convertisseur de tension à découpage tirera le meilleur parti de l'énergie stockée dans un accumulateur Lithium-Carbone ayant une tension qui décroît avec sa décharge.

En outre, un tel dispositif d'alimentation convient particulièrement bien pour un radiotéléphone portatif cellulaire émetteur/récepteur, par exemple du type GSM, si on prévoit un moyen qui commute à l'arrêt le convertisseur pendant les phases de réception du radiotéléphone de façon à réduire les émissions d'interférences électromagnétiques provenant du convertisseur. Pendant les phases d'émission, les pointes de consommation sont complètement absorbées par le supercondensateur apte à procurer la puissance instantanée requise.

Un exemple de réalisation de l'invention est décrit ci-dessous en détail en référence aux figures.

La figure 1 est un synoptique général simplifié du dispositif d'alimentation selon l'invention.

La figure 2 est un synoptique plus détaillé du dispositif d'alimentation selon l'invention.

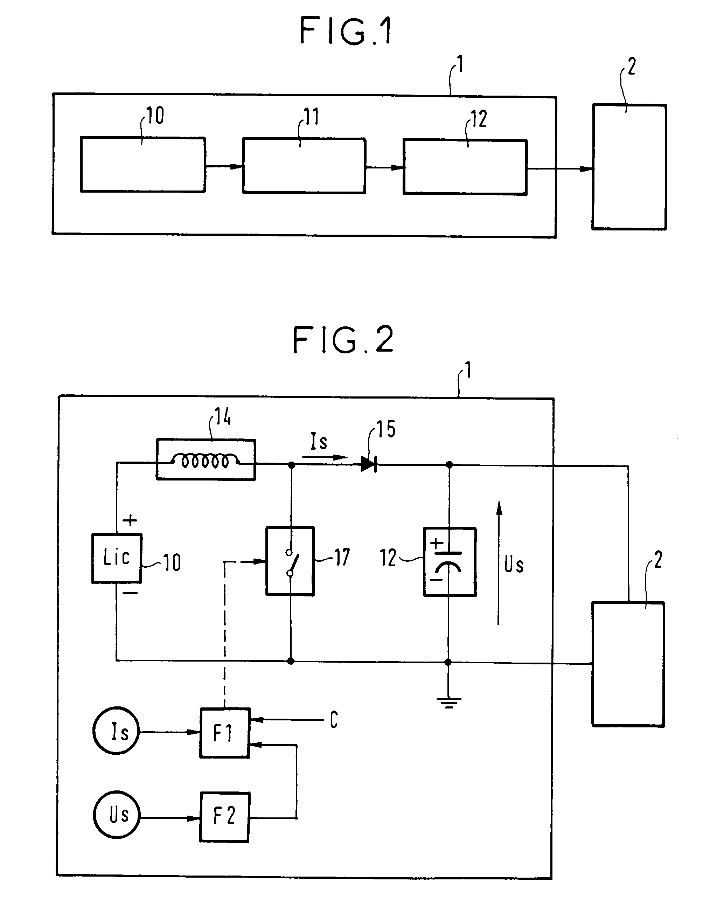

Figure 1, le dispositif d'alimentation en énergie électrique 1 alimente un appareil 2, éventuellement portatif, à consommation variable dans le temps, par exemple un radiotéléphone cellulaire du type GSM.

Ce dispositif 1 comprend au moins un générateur électrochimique 10, un convertisseur de tension 11 couplé aux bornes de l'accumulateur et un supercondensateur 12 couplé en sortie du convertisseur et destiné à alimenter en énergie électrique l'appareil externe 2.

Le supercondensateur 12 fournit l'énergie électrique à l'appareil externe 2 tandis que le convertisseur 11 recharge le supercondensateur à partir du générateur 10.

Le dispositif 1 peut se présenter sous la forme d'une batterie autonome. On peut envisager aussi que le supercondensateur fasse partie de l'appareil externe ou encore que le générateur électrochimique, le convertisseur et le supercondensateur soient dissociés.

Figure 2, on a représenté plus en détails le dispositif d'alimentation 1.

Il comprend donc un ou plusieurs générateurs électrochimiques 10 montés le cas échéant en série. De préférence, le dispositif d'alimentation 1 comprend un seul accumulateur Lithium-Carbone (LiC) ayant une borne positive et une borne négative.

Il comprend encore un convertisseur de tension à découpage couplé aux bornes positive et négative du générateur 10. Il s'agit ici d'un convertisseur élévateur de tension constitué d'une inductance 14 reliée à la borne positive du générateur, d'une diode 15 reliée à l'inductance 14, d'un interrupteur 17 monté en parallèle entre l'inductance 14 et la diode 15 et un circuit de commande qui modifie le rapport cyclique du hacheur constitué par l'interrupteur 17. L'interrupteur 17 est classiquement un "MOSFET" de puissance.

Le dispositif d'alimentation comprend enfin le supercondensateur 12 couplé en parallèle en sortie de la diode 15. Un tel élément de stockage d'énergie électrique a une impédance très faible, une forte capacité pour un faible encombrement. De préférence on utilise un supercondensateur du type à charbon actif ou à oxydes métalliques.

Le circuit de commande du convertisseur de tension à découpage se compose d'une fonction F1 commandant l'ouverture et la fermeture de l'interrupteur 17 et asservie sur le courant Is en entrée de la diode 15. Il comprend encore une fonction F2 commandant la marche ou l'arrêt du convertisseur (via la fonction F1) en fonction du niveau de la tension Us aux bornes du supercondensateur 12.

Le fonctionnement du dispositif d'alimentation est le suivant. Quand l'appareil externe 2 consomme de l'énergie, il décharge le supercondensateur jusqu'à ce que la tension Us aux bornes de celui-ci devienne inférieure à un premier seuil. En réponse à la détection du franchissement de ce premier seuil de tension, la fonction F2 commande la mise en marche du convertisseur via la fonction F1. Le convertisseur charge alors le supercondensateur à courant contrôlé Is constant (par modification du rapport cyclique) en puisant l'énergie dans le générateur 10 jusqu'à ce que le niveau de tension Us aux bornes du supercondensateur atteigne un second seuil plus grand que le premier seuil. En réponse à la détection du franchissement de ce second seuil de tension, la fonction F2 commande l'arrêt du convertisseur via la fonction F1.

Les fonctions F1 et F2 peuvent être réalisées à l'aide respectivement des circuits "MAX741" et "MAX921" vendus par la société "MAXIM".

Typiquement, un accumulateur Lithium-Carbone peut fournir une tension de l'ordre de 4,2 volts à pleine charge et la tension régulée Us aux bornes du supercondensateur peut être maintenue entre un premier seuil de 4,9 volts et un second seuil de 5 volts. Le convertisseur élévateur de tension permet en outre l'alimentation sur un seul accumulateur LiC ce qui résout un problème lié à la recharge de l'accumulateur.

On comprend que cet agencement contribue à améliorer le rendement de l'accumulateur par rapport à une solution sans supercondensateur tout en obtenant une augmentation de la puissance instantanée disponible pour l'appareil externe.

Ce dispositif d'alimentation léger et peu encombrant convient pour un radiotéléphone cellulaire portable fonctionnant en émission et en réception. Figure 2, une commande extérieure C sert à commuter à l'arrêt le convertisseur 11 pendant les phases de réception du radiotéléphone.

A noter que le supercondensateur "moyenne" le courant consommé sur le dispositif d'alimentation. Il autorise de la sorte une plus grande impédance du générateur électrochimique.

## Revendications

1. Un dispositif d'alimentation en énergie électrique pour un appareil externe (2) à consommation variable dans le temps comprenant :
- un générateur électrochimique (10),
- un condensateur (12) servant de source d'énergie électrique pour ledit appareil,
- un convertisseur de tension à découpage (11) connecté pour charger le condensateur en énergie électrique provenant du générateur,
caractérisé en ce qu'il comprend en outre des moyens (F1,F2) pour commander le convertisseur de telle manière qu'il charge le condensateur à courant constant contrôlé (Is) dès que la tension (Us) aux bornes du condensateur est en dessous d'un premier seuil et qu'il arrête de fonctionner quand la tension aux bornes du condensateur atteint un second seuil supérieur au premier seuil, le condensateur étant un superconducteur.

2. Le dispositif selon la revendication 1, dans lequel le supercondensateur (12) est du type à charbon actif ou à oxydes métalliques.

3. Le dispositif selon l'une des revendications 1 à 2, dans lequel le générateur électrochimique (10) est un accumulateur Lithium-Carbone.

4. Le dispositif selon l'une des revendications 1 à 3, dans lequel le convertisseur (11) est un élévateur de tension.

5. Un radiotéléphone cellulaire émetteur/récepteur, comprenant un dispositif selon l'une des revendications 1 à 4 et un moyen (C) pour arrêter le fonctionnement du convertisseur (11) en phase de réception du radiotéléphone.

## Patentansprüche

1. Eine Stromversorgungseinrichtung für ein externes Gerät (2) mit zeitlich veränderichem Bedarf, die umfasst:
- einen elektrochemischen Generator (10),
- einen Kondensator (12), der als elektrische Energiequelle für das genannte Gerät dient,
- einen Strobungs-Spannungswandler (11), der zur Aufladung des Kondensators, mit vom Generator stammender elektrischer Energie mit diesem verbunden ist,
**dadurch gekennzeichnet, dass** sie außerdem
Vorrichtungen (F1, F2) aufweist, um den Wandler so zu steuern, dass er den Kondensator mit kontrolliertem, konstanten Strom (Is) auflädt, sobald die Spannung (Us) an den Anschlussklemmen des Kondensators unterhalb einer ersten Grenze ist, und dass er aufhört zu arbeiten, wenn die Spannung an den Anschlussklemmen des Kondensators eine zweite Grenze erreicht, die oberhalb der ersten Grenze liegt, wobei der Kondensator ein Superkondensator ist.

2. Die Einrichtung nach Anspruch 1, bei welcher der Superkondensator (12) ein Aktivkohle- oder ein Metalloxid-Superkondensator ist.

3. Die Einrichtung nach einem der Ansprüche 1 bis 2, bei welcher der elektrochemische Generator (10) ein Lithium-Kohlenstoff Akkumulator ist.

4. Die Einrichtung nach einem der Ansprüche 1 bis 3, bei welcher der Spannungswandler (11) ein Aufwärtswandler ist.

5. Ein verzelltes Sende-/Empfangs-Funkgerät, das mit einer Einrichtung nach einem der Ansprüche 1 bis 4 und einer Vorrichtung (C) um den Betrieb des Wandlers (11) im Takt mit der Empfangsphase des Funkgerätes anzuhalten, ausgestattet ist.

## Claims

1. An electricity power supply circuit for an external appliance (2) whose power consumption varies over time, the circuit comprising:
an electrochemical cell (10);
a capacitor (12) serving as the source of electricity for said appliance; and
a chopper voltage converter (11) connected to charge the capacitor with electricity taken from the cell;
the circuit being characterized in that it further comprises means (F1, F2) for controlling the converter in such a manner that it charges the capacitor at controlled constant current (Is) whenever the voltage (Us) across the terminals of the capacitor is less than a first threshold, and that it ceases to operate when the voltage across the terminals of the capacitor reaches a second threshold greater than the first threshold, the capacitor being a supercapacitor.

2. A circuit according to claim 1, in which the supercapacitor (12) is of the metal oxide or active carbon type.

3. A circuit according to claim 1 or 2, in which the electrochemical cell (10) is a lithium-carbon storage cell.

4. A circuit according to any one of claims 1 to 3, in which the converter (11) is a voltage-raising converter.

5. A cellular radiotelephone transmitter/receiver including a circuit according to any one of claims 1 to 4 and means (C) for switching the converter (11) OFF while the radiotelephone is receiving.
